# DEMANDE DE BREVET EUROPEEN

(11) **EP 1 271 963 A2**
(43) Date de publication de la demande: **02.01.2003**
(21) Numéro de dépôt: 02077381.8
(22) Date de dépôt: 14.06.2002
(51) Int. Cl.: H04N 7/50

(54) **Circuit mémoire conçu pour un accès parallèle en lecture ou en écriture de données à plusieurs composantes**

(30) Priorité: 19.06.2001 FR 0108046
(71) Demandeur: Koninklijke Philips Electronics N.V., 5621 BA Eindhoven (NL)
(72) Inventeur: Lafage, Anne, Société Civile SPID, 75008 Paris (FR); Nguyen-Phuc, Lien, Société Civile SPID, 75008 Paris (FR); Talayssat, Jacky, Société Civile SPID, 75008 Paris (FR)
(74) Mandataire: Chaffraix, Jean

(57) **Abrégé**

La présente invention concerne circuit mémoire (MEM) apte à recevoir un premier bloc de données comportant plusieurs composantes et provenant d'une mémoire externe (EXT) afin de les écrire (W) dans une mémoire interne. Le circuit mémoire est également apte à fournir (R) à un dispositif de sortie (FIL) un second bloc de données d'une composante desdites données. Le circuit mémoire comprend des bancs de données aptes à recevoir des mots de données, et des contrôleurs d'adresses associés aux bancs de données et aptes à organiser un accès en lecture ou en écriture des données dans la mémoire interne du circuit mémoire, ceci en minimisant le nombre de bancs de données utilisés. Ainsi, il est possible de lire ou d'écrire rapidement dans le circuit mémoire pour un coût relativement modique.

## Description

### Domaine technique de l'invention

La présente invention concerne un circuit mémoire apte à stocker temporairement un premier bloc de données comprenant au plus N composantes, et apte à fournir un second bloc de N lignes d'une composante desdites données, ledit circuit mémoire comprenant des bancs de données aptes à recevoir des mots de données, et des contrôleurs d'adresses associés aux bancs de données.

Elle trouve notamment son application dans des appareils numériques destinés à faire de la composition d'objets vidéo comme, par exemple, les décodeurs vidéo de type MPEG-4, les accélérateurs graphiques 3D, les jeux vidéo, les assistants personnels numériques ou encore les téléphones mobiles.

### Etat de la technique antérieure

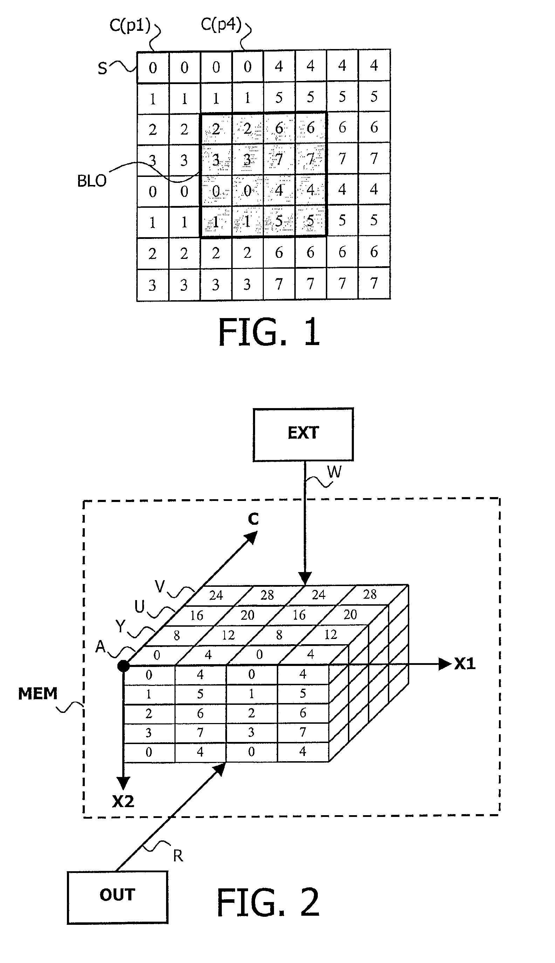

Un tel circuit mémoire est connu dans le domaine du traitement d'images numériques, notamment pour des opérations d'interpolation de pixels utilisant des filtres bidimensionnels. Par exemple, dans le cas d'un filtre bidimensionnel de 4x4 pixels, le circuit mémoire possède une organisation qui est décrite à la Fig. 1. Ledit circuit mémoire comprend des bancs de données numérotés de 0 à 7 dans l'exemple choisi. Un banc de données contient au moins un mot de 32 bits (S) comprenant les valeurs d'une composante (C) de 4 pixels horizontalement contigus (p1-p4). La composante est, dans le cas de données numériques vidéo de type MPEG-4, la luminance Y, la chrominance U ou V, ou la transparence A. Afin de permettre un accès parallèle au bloc de la composante de 4x4 pixels, 4 mots de 32 bits verticalement contigus ne doivent pas être placés dans un même banc de données. En conséquence, 2 mots de 32 bits verticalement contigus sont placés dans 2 bancs de données consécutifs numérotés n modulo 8 et n+1 modulo 8 où modulo 8 est l'opération dont le résultat est le reste de la division par 8. De plus, le bloc de la composante de 4x4 pixels auquel on veut accéder en lecture peut être situé à cheval sur 2 mots de 32 bits horizontalement contigus. Afin de permettre un accès parallèle au bloc de la composante de 4x4 pixels, 2 mots de 32 bits horizontalement contigus ne doivent donc pas être placés dans un même banc de données. En conséquence, 2 mots de 32 bits horizontalement contigus sont placés dans 2 bancs de données différents numérotés n modulo 8 et n+4 modulo 8. Ainsi, un tel circuit mémoire permet un accès parallèle en lecture à n'importe quel bloc de 4x4 pixels d'une composante de données, comme par exemple le bloc représenté en gris (BLO), sans conflit entre les différents bancs de données.

Le principe d'un tel circuit mémoire est décrit dans le document intitulé "Architecture d'un accélérateur matériel pour la composition d'objets vidéo MPEG-4", C. Miro, Thèse de doctorat à l'Ecole Nationale Supérieure des Télécommunications, spécialité électronique et communications, 18 février 2000.

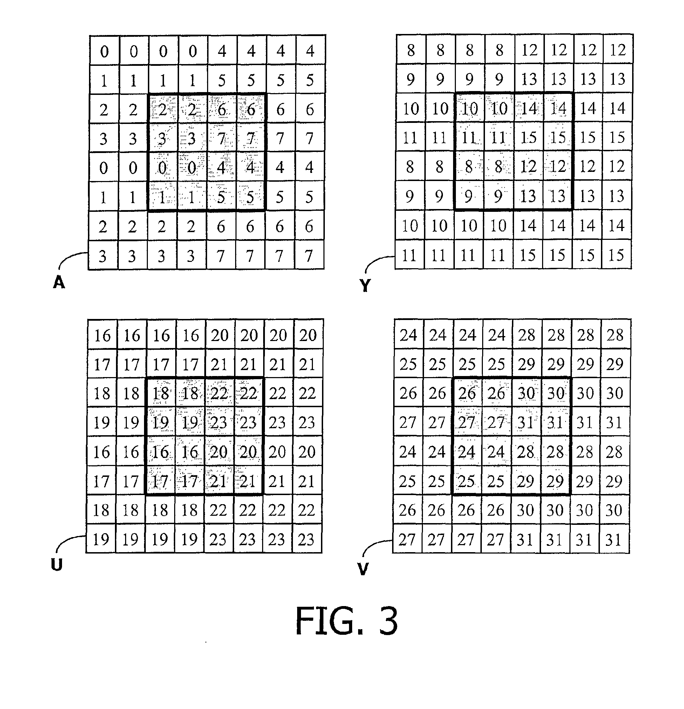

Cependant, cette organisation de la mémoire interne du circuit mémoire est conçue pour un accès à deux dimensions, c'est à dire seulement pour un accès parallèle en lecture ou en écriture à l'une des composantes d'un bloc de pixels. Elle est optimale lorsque les composantes qui sont écrites dans la mémoire interne proviennent d'une mémoire externe où elles sont stockées séparément, c'est à dire si les mots écrits successivement dans la mémoire interne correspondent à une même composante C de plusieurs pixels consécutifs p1 à pn (C[p1]-C[pn]). Or, les données fournies par la mémoire externe sont souvent disponibles sous forme coplanaire, à savoir sous la forme d'une structure comprenant successivement les différentes composantes A, Y, U et V pour chaque pixel pi (A[pi]Y[pi]U[pi]V[pi]). Afin de permettre un accès à trois dimensions des données, comme illustré à la Fig. 2, c'est à dire soit un accès parallèle en lecture (R) par un circuit de sortie (OUT) à un premier bloc de pixels d'une des composantes desdits pixels, soit un accès parallèle en écriture (W) par une mémoire externe (EXT) à un second bloc de données comportant successivement les composantes de chaque donnée, ces deux types d'accès étant indépendants, une multiplication des bancs de données selon le schéma de la Fig. 3 est nécessaire. On se retrouve ainsi avec 32 bancs de données numérotés de 0 à 31 selon le principe exposé ci-dessus. Cette solution présente l'inconvénient d'être particulièrement complexe à mettre en oeuvre car elle augmente le nombre de bancs de données, et par voie de conséquence, le nombre de contrôleurs d'adresses permettant de gérer la mémoire interne.

### Exposé de l'invention

La présente invention a pour but de proposer un circuit mémoire apte à gérer de manière plus simple et efficace un accès à trois dimensions de données comportant plusieurs composantes.

A cet effet, le circuit mémoire selon la présente invention est remarquable en ce que les contrôleurs d'adresses associés aux bancs de données sont aptes à:
- stocker N premiers mots d'une première composante verticalement contigus entre eux dans N premiers bancs de données ayant N numéros différents,
- stocker N seconds mots de la première composante, verticalement contigus entre eux et horizontalement contigus aux N premiers mots, dans N seconds bancs de données ayant N autres numéros différents, et
- stocker N mots d'une deuxième composante, verticalement contigus entre eux et correspondant aux mêmes données que N mots de la première composante, dans des bancs de données ayant des numéros correspondant à une permutation circulaire des numéros des bancs de données associés aux N mots de la première composante.

La présente invention concerne également un décodeur de données vidéo comprenant une mémoire externe apte à fournir un premier bloc de données vidéo, le circuit mémoire décrit ci-dessus apte à stocker temporairement le premier bloc de données vidéo et apte à fournir un second bloc de N lignes d'une composante desdites données vidéo, et un dispositif de traitement apte à traiter le second bloc de données vidéo.

Un tel circuit mémoire utilise au plus 2N bancs de données différents, si la largeur du second bloc de données est telle que ce dernier ne peut chevaucher plus de 2 mots de données, soit 8 bancs de données au lieu des 32 bancs de données de la solution qui s'imposerait à l'évidence à l'homme du métier à partir de l'état de la technique antérieure. En effet, un même banc de données sert ici à stocker différentes composantes de données différentes ce qui réduit considérablement le nombre de bancs de données par rapport à l'état de la technique antérieure. Ainsi, l'organisation du circuit mémoire permettant le stockage des données est telle que la lecture d'un bloc de données ne nécessite de lire qu'une adresse mémoire par bancs de données pour obtenir les valeurs comprises dans ledit bloc de données, ceci pour n'importe quelle composante de données.

La mise en oeuvre d'un tel circuit s'en trouve facilitée, le nombre de contrôleurs d'adresses ayant été divisé par le nombre de composantes. La diminution du nombre de bancs de données simplifie ainsi le décodage des adresses et donc la taille totale de la mémoire. Par conséquent, grâce à ces accès parallèle, il est possible de lire ou d'écrire rapidement dans le circuit mémoire pour un coût relativement modique.

### Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :
- la Fig. 1 illustre l'organisation d'un circuit mémoire selon l'état de la technique antérieure pour un accès à 2 dimensions d'une composante de données,
- la Fig. 2 illustre ce que serait, à partir de l'enseignement de l'état de la technique, l'organisation d'un circuit mémoire pour un accès à trois dimensions de données comportant plusieurs composantes,
- la Fig. 3 est une représentation schématique de l'organisation du circuit mémoire de la Fig. 2 pour chacune desdites composantes,
- la Fig. 4 illustre l'organisation du circuit mémoire selon l'invention pour un accès à trois dimensions de données comportant plusieurs composantes,
- la Fig. 5 est une représentation schématique de l'organisation du circuit mémoire selon l'invention pour chacune desdites composantes, et
- la Fig. 6 est une représentation schématique d'un décodeur de données au format MPEG-4.

### Exposé détaillé d'au moins un mode de réalisation de l'invention

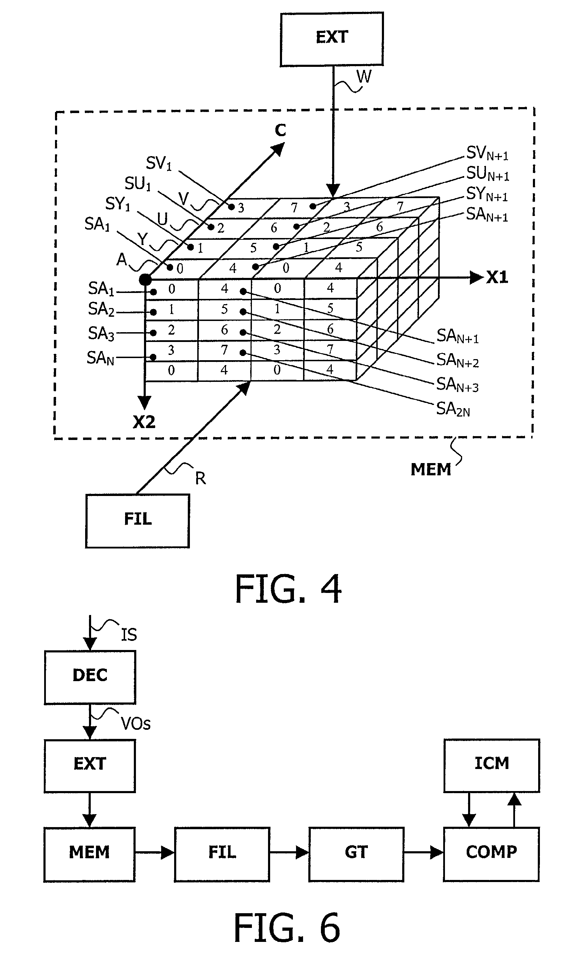

La présente invention concerne un circuit mémoire organisé de manière à pouvoir écrire ou lire de façon optimale des données comprenant plusieurs composantes dans une mémoire interne. Un tel circuit mémoire est représenté à la Fig. 4. Il peut s'agir par exemple d'une mémoire vive de type RAM (de l'anglais "Random Access Memory").

Ledit circuit mémoire (MEM) est apte à recevoir un premier bloc de données provenant d'une mémoire externe (EXT) afin de les écrire (W) dans sa mémoire interne. Un tel circuit mémoire est particulièrement adapté au domaine du traitement d'images. Dans ce cas, les données sont des pixels. Chaque pixel comporte 4 composantes dans notre exemple, une composante de luminance Y, deux composantes de chrominance U et V, et une composante dite de transparence A qui est caractéristique de la norme MPEG-4. D'autres composantes sont également envisageables. La composante de transparence A peut, par exemple, être remplacée par la composante de forme binaire. Les pixels issus de la mémoire externe peuvent être disponibles sous la forme de mots d'une même composante de plusieurs pixels consécutifs, par exemple des mots de 32 bits d'une même composante pour 4 pixels consécutifs, chaque valeur d'une composante étant codée sur 8 bits. Les pixels issus de la mémoire externe peuvent également être disponibles sous forme coplanaire, à savoir sous la forme dune structure comprenant successivement pour chaque pixel les différentes composantes A, Y, U et V. Dans notre exemple, le circuit mémoire doit supporter l'écriture en mode coplanaire de 4pixels de la composante A, 4 pixels de la composante Y, 4 pixels de la composante U et 4 pixels de la composante V, soit: A[p1]Y[p1]U[p1]V[p1]A[p2]Y[p2]U[p2]V[p2]A[p3]Y[p3]U[p3]V[p3]A[p4]Y[p4]U[p4]V[p4]. Le circuit mémoire peut également supporter d'autres modes d'écriture coplanaires, comme par exemple: A[p1]A[p2]Y[p1]Y[p2]U[p1]U[p2]V[p1]V[p2]A[p3]A[p4]Y[p3]Y[p4]U[p3]U[p4]V[p3]V[p4],

Le circuit mémoire (MEM) est également apte à fournir (R) à un dispositif de sortie un second bloc de données de N lignes par M colonnes d'une composante des données, où N et M sont des entiers positifs. Le dispositif de sortie est dans notre exemple un filtre (FIL) bidimensionnel NxM, et plus précisément ici 4x4. Un tel filtre permet d'effectuer une interpolation de pixels lors du calcul d'une transformation géométrique, en vue, par exemple, de transformer un objet vidéo MPEG-4 à l'intérieur d'une scène codée selon la norme MPEG-4.

La mémoire interne comporte des bancs de données numérotés de 0 à 7 sur la Fig. 4, lesdites bancs étant aptes à recevoir des mots de données de 32 bits. A chaque banc de données est associé un contrôleur d'adresses, non représenté sur la Fig. 4, qui permet d'écrire ou de lire à un emplacement donné de la mémoire interne du circuit mémoire. Le contrôleur d'adresses permet de calculer une adresse physique de la mémoire interne dans laquelle on va lire ou écrire, à partir d'une position géométrique dans une image d'un pixel pi correspondant à une composante C[pi].

La mémoire interne est organisée selon 3 dimensions, le plan (X1,X2) correspondant au plan de lecture, le plan (X1,C) correspondant au plan d'écriture. Grâce aux contrôleurs d'adresses, le circuit mémoire écrit les mots de données de 32 bits dans sa mémoire interne de la façon suivante.

Les N premiers mots (SA₁-SA_{N}) d'une première composante (A) verticalement contigus entre eux sont stockés dans N premiers bancs de données ayant N numéros différents. Dans le mode de réalisation préféré, 2 bancs de données correspondant à des mots verticalement contigus (Sₙ,Sₙ₊₁) ont des numéros égaux respectivement aux restes des divisions par 2N d'un entier positif n quelconque et d'un entier n+1, soit n modulo 2N et n+1 modulo 2N. Ainsi, dans la représentation de la Fig. 4, N est égal à 4 et les N premiers bancs de données verticalement contigus sont numérotés de 0 à 3.

Les N seconds mots (SA_{N+1}-SA_{2N}) de la première composante, verticalement contigus entre eux et horizontalement contigus aux N premiers mots, sont stockés dans N seconds bancs de données ayant N autres numéros différents. Dans le mode de réalisation préféré, 2 bancs de données correspondant à des mots horizontalement contigus (Sₙ,S_{n+N}) ont des numéros égaux respectivement aux restes des divisions par 2N d'un entier positif n quelconque et d'un entier n+N, soit n modulo 2N et n+N modulo 2N. Ainsi, dans la représentation de la Fig. 4, N est égal à 4 et les N seconds bancs de données verticalement contigus entre eux et horizontalement contigus aux N premiers bancs de données sont numérotés de 4 à 7.

Enfin, les N premiers mots (SY₁-SY_{N}) et seconds mots (SY_{N+1}-SY_{2N}) d'une deuxième composante (Y) correspondant aux mêmes pixels que les N premiers et seconds mots de la première composante, sont stockés dans des bancs de données ayant des numéros correspondant respectivement à une permutation circulaire des numéros desdits premiers et seconds bancs de données. Dans le mode de réalisation préféré, 2 bancs de données correspondant à 2 mots (SAₙ,SYₙ) de 2 composantes différentes (A,Y) du même pixel ont des numéros égaux respectivement aux restes des divisions par 2N d'un entier positif n quelconque et d'un entier n+p, p étant compris entre 1 et un nombre de composantes, soit n modulo 2N et n+p modulo 2N. Ainsi, dans la représentation de la Fig. 4, N est égal à 4 et les N seconds bancs de données contenant les mots de 32 bits de données SA₁, SY₁, SU₁ et SV₁ de chacune des composantes A, Y, U et V sont respectivement numérotés de 0 à 3 tandis que les bancs de données SA_{N+1}, SY_{N+1}, SU_{N+1} et SV_{N+1} sont respectivement numérotés de 4 à 7.

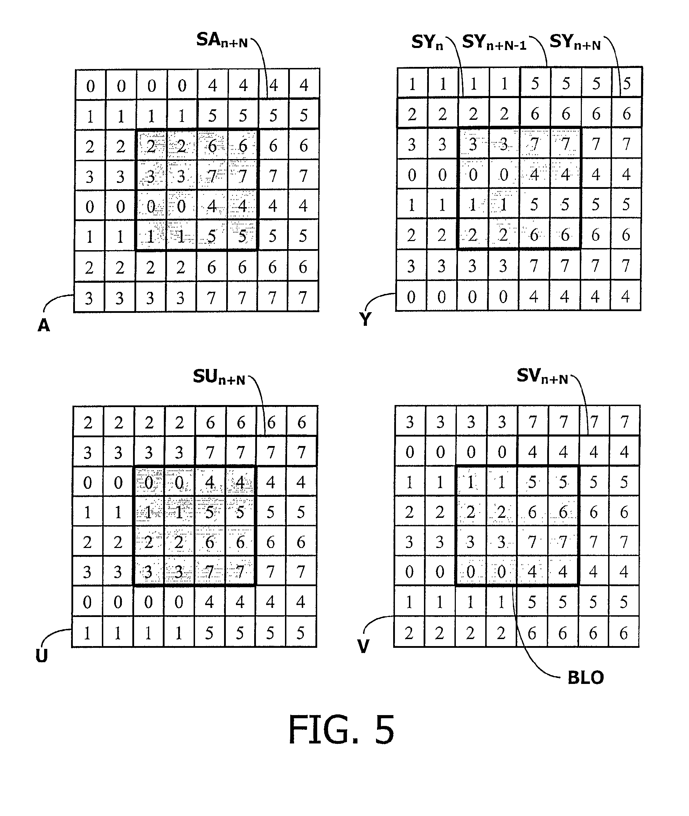

La Fig. 5 est une représentation schématique de l'organisation du circuit mémoire selon l'invention pour chacune desdites composantes. On retrouve bien qu'un mot de données SY_{n+N} d'une composante, la luminance Y par exemple, est stocké dans un banc de données de numéro différent d'un banc de données qui contient un mot de données adjacentes horizontalement (SYₙ), ou verticalement (SY_{n+N-1}) ou d'un banc de données qui contient un mot de données d'une composante différente (SA_{n+N}, SU_{n+N}, SV_{n+N}).

Ainsi, le circuit mémoire permet, d'une part, un accès parallèle en écriture à un bloc de 4 pixels de 4 composantes de données, que ces 4 pixels soient fournis composante par composante ou sous forme coplanaire. Il permet, d'autre part, un accès parallèle en lecture, indépendant de l'accès parallèle en lecture, à n'importe quel bloc de 4x4 pixels d'une composante de pixels comme, par exemple, le bloc représenté en gris (BLO) sur la Fig. 5, les accès en lecture ou en écriture se produisant sans conflit entre les différents bancs de données.

Le circuit mémoire selon la présente invention a été décrit dans un cas particulier d'implémentation. L'organisation de la mémoire interne correspond au cas où des mots de 32 bits sont stockés et où le dispositif de sortie est un filtre qui effectue des accès à des blocs de 4x4 données. Il apparaîtra à l'homme du métier que la présente invention s'applique également à tout circuit mémoire quelque soit la taille des blocs de données à lire, quelque soit la taille des mots de données et quelque soit le type d'accès. Dans le cas général, le nombre de bancs de données nécessaires à l'organisation du circuit mémoire pour permettre un accès à 3 dimensions des données est égal au nombre de bancs qui est nécessaire à l'organisation du circuit mémoire de l'état de la technique antérieure pour permettre un accès à 2 dimensions des données. Ainsi, si la taille des blocs de données à lire est de N lignes par M colonnes et si la taille des mots de données est q que multiplient R bits, en supposant qu'une valeur d'une composante est codée sur q bits, le nombre de bancs de données nécessaires à l'organisation du circuit mémoire selon l'invention est égal au produit de N par un coefficient multiplicatif mc fonction de M et de R. Ce coefficient multiplicatif mc traduit la possibilité pour un bloc de données à lire de se retrouver, dans le pire des cas, à cheval sur mc bancs de données. Le coefficient multiplicatif mc est égal à 1 si M=1, 2 si M=2 à R+1, 3 si M=R+2 à 2R+1, et plus généralement à k si M=(k-2).R+2 à (k-1).R+1.

Il apparaîtra cependant à l'homme du métier que la présente invention ne s'applique que si les accès dans le plan (X1,X2) sont indépendants des accès dans le plan (X1,C). De plus, l'organisation de la mémoire n'est applicable qu'à tout type de données comportant au plus N composantes pour un circuit mémoire comportant N que multiplient mc bancs de données. Autrement dit, si le circuit mémoire doit stocker N composantes, il comportera au moins N que multiplient mc bancs de données.

La Fig. 6 décrit un décodeur de données au format MPEG-4. Un flux de données (IS) est tout d'abord décodé par un circuit de décodage (DEC), résultant en un ensemble d'objets vidéo (VOs). Ces objets vidéo sont stockés dans une mémoire externe (EXT), par exemple sous la forme coplanaire précédemment décrite. La composition des objets vidéo en vue de leur affichage s'effectue alors en deux étapes principales. Lors d'une première étape, un premier objet vidéo (VO1) est traité. Ledit premier objet vidéo est transféré, bloc de données par bloc de données, dans le circuit mémoire (MEM) selon l'invention. Un bloc de données qui vient d'être stocké dans le circuit mémoire est ensuite traité à l'aide d'une unité de traitement (FIL), qui est une unité de filtrage dans le mode de réalisation préféré, puis subit une transformation géométrique via une unité de transformation géométrique (GT). Le premier objet vidéo transite alors via une unité de composition (COMP) afin d'être stocké dans une mémoire de composition intermédiaire (ICM). Dans une seconde étape, un second objet vidéo et le premier objet vidéo sont composés, bloc de données par bloc de données, de la façon suivante. Le second objet vidéo (VO2) subit tout d'abord un traitement similaire au premier objet vidéo, à savoir un stockage temporaire dans le circuit mémoire (MEM), un filtrage (FIL) et une transformation géométrique (GT). Puis le bloc de données du second objet vidéo issu de l'unité de transformation géométrique est composé avec le bloc de données du premier objet vidéo issu de la mémoire de composition intermédiaire (ICM). L'objet vidéo composé intermédiaire résultant de cette composition est stocké dans la mémoire de composition intermédiaire. La deuxième étape est répétée autant de fois qu'il y a d'objets vidéo à composer. Un nouvel objet vidéo est lu à partir de la mémoire externe (EXT), bloc de données par bloc de données, puis stocké dans le circuit mémoire (MEM), filtré, transformé et enfin composé avec l'objet vidéo composé intermédiaire stocké dans la mémoire de composition intermédiaire. Le résultat de cette composition est de nouveau stocké dans la mémoire de composition intermédiaire. Lorsque l'ensemble des objets vidéo est composé, la scène est prête à être affichée sur un écran.

Aucun signe de référence entre parenthèses dans le présent texte ne doit être interprété de façon limitative. Le verbe "comprendre" et ses conjugaisons doit également être interprété de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

## Revendications

1. Circuit mémoire (MEM) apte à stocker temporairement un premier bloc de données comprenant au plus N composantes, et apte à fournir un second bloc de N lignes d'une composante desdites données, ledit circuit mémoire comprenant des bancs de données aptes à recevoir des mots de données, et des contrôleurs d'adresses associés aux bancs de données et aptes à:
- stocker N premiers mots (SA₁-SA_{N}) d'une première composante (A) verticalement contigus entre eux dans N premiers bancs de données ayant N numéros différents,
- stocker N seconds mots (SA_{N+1}-SA_{2N}) de la première composante, verticalement contigus entre eux et horizontalement contigus aux N premiers mots, dans N seconds bancs de données ayant N autres numéros différents, et
- stocker N mots (SY₁-SY_{N},SY_{N+1}-SY_{2N}) d'une deuxième composante (Y), verticalement contigus entre eux et correspondant aux mêmes données que N mots (SA₁-SA_{N},SA_{N+1}-SA_{2N}) de la première composante, dans des bancs de données ayant des numéros correspondant à une permutation circulaire des numéros des bancs de données associés aux N mots de la première composante.

2. Circuit mémoire selon la revendication 1, où
- 2 bancs de données correspondant à des mots verticalement contigus (Sₙ,Sₙ₊₁) ont des numéros égaux respectivement aux restes des divisions par 2N d'un entier positif n quelconque et d'un entier n+1,
- 2 bancs de données correspondant à des mots horizontalement contigus (Sₙ,S_{n+N}) ont des numéros égaux respectivement aux restes des divisions par 2N d'un entier positif n quelconque et d'un entier n+N, et
- 2 bancs de données correspondant à 2 mots (SAₙ,SYₙ) de 2 composantes différentes (A,Y) des mêmes données ont des numéros égaux respectivement aux restes des divisions par 2N d'un entier positif n quelconque et d'un entier n+p, p étant compris entre 1 et un nombre de composantes.

3. Décodeur de données vidéo comportant au plus N composantes, ledit décodeur comprenant une mémoire externe (EXT) apte à fournir un premier bloc de données vidéo, un circuit mémoire (MEM) apte à stocker temporairement le premier bloc de données vidéo et apte à fournir un second bloc de N lignes d'une composante desdites données vidéo, et un dispositif de traitement (FIL) apte à traiter le second bloc de données vidéo, le circuit mémoire comprenant des bancs de données aptes à recevoir des mots de données, et des contrôleurs d'adresses associés aux bancs de données et aptes à:
- stocker N premiers mots (SA₁-SA_{N}) d'une première composante (A) verticalement contigus entre eux dans N premiers bancs de données ayant N numéros différents,
- stocker N seconds mots (SA_{N+1}-SA_{2N}) de la première composante, verticalement contigus entre eux et horizontalement contigus aux N premiers mots, dans N seconds bancs de données ayant N autres numéros différents, et
- stocker N mots (SY₁-SY_{N},SY_{N+1}-SY_{2N}) d'une deuxième composante (Y), verticalement contigus entre eux et correspondant aux mêmes données que les N mots (SA₁-SA_{N},SA_{N+1}-SA_{2N}) de la première composante, dans des bancs de données ayant des numéros correspondant à une permutation circulaire des numéros des bancs de données associés aux N mots de la première composante.
